# FASCICULE DE BREVET EUROPEEN

(11) **EP 2 135 778 B1**
(45) Date de publication et mention de la délivrance du brevet: **14.12.2011**
(21) Numéro de dépôt: 09163019.4
(22) Date de dépôt: 17.06.2009
(51) Int. Cl.: B60R 19/38

(54) **Pare-chocs arrière pour véhicule automobile utilitaire**
Hintere Stoßstange für Nutzfahrzeug
Rear bumper for a commercial vehicle

(30) Priorité: 18.06.2008 FR 0854021
(43) Date de publication de la demande: 23.12.2009
(73) Titulaire: Faurecia Bloc Avant, 92000 Nanterre (FR)
(72) Inventeur: Gonin, Vincent, 25600, SOCHAUX (FR)
(74) Mandataire: Jacobson, Claude

(56) Documents cités:
- EP-A- 0 745 516
- EP-A- 1 162 116
- EP-A- 1 470 966
- US-A- 3 533 654

## Description

La présente invention concerne un pare-chocs arrière pour véhicule automobile utilitaire ou particulier de tourisme. Dans ce qui suit, on désigne par véhicule automobile utilitaire, un véhicule présentant un volume arrière important, tel qu'un fourgon léger, un monospace, un SUV (« Sport Utility Vehicule » pour véhicule utilitaire de sport), un ludospace, un minispace, etc.

Compte tenu, d'une part, des exigences de chargement du volume arrière, telles qu'un seuil de chargement abaissé, un plancher plat, etc., et, d'autre part, des exigences en vigueur sur la garde au sol d'un véhicule, les pare-chocs arrière connus des véhicules utilitaires possèdent une hauteur faible. En conséquence, ces pare-chocs connus présentent des performances réduites en matière de résistance aux chocs. De plus, la partie inférieure de ou des ouvrants arrière, qui descend jusqu'au niveau du seuil de chargement du volume intérieur, est souvent déformée en cas de choc. Cela entraîne des réparations importantes, de tôlerie et éventuellement de remplacement du système de fermeture des ouvrants, charnières et serrures.

Le document EP 1 162 116 A1 divulgue un pare-chocs d'un véhicule de tourisme, comportant un bloc central mobile entre : une position de fermeture, dans laquelle un bord supérieur du bloc central fait saillie verticalement au-dessus du seuil de chargement d'un volume arrière du véhicule, et est apte à coopérer avec au moins un ouvrant du véhicule pour fermer une ouverture d'accès au volume arrière ; et une position d'ouverture, dans laquelle le bord supérieur du bloc central est situé au niveau ou au-dessous du seuil de chargement pour permettre l'accès au volume arrière. Le bloc central comporte une coque extérieure, entourant une unique traverse intérieure métallique, rectiligne et en caisson, dont les extrémités sont en appui par l'intermédiaire d'amortisseurs de choc sur les longerons du véhicule.

De plus, seul le bloc central de ce pare-chocs est mobile. Ce pare-chocs comporte deux blocs latéraux fixes qui permettent au pare-chocs d'être conforme aux normes relatives aux chocs arrière et en particulier aux chocs à angle.

Les moyens de déplacement du bloc central d'une position à l'autre, ainsi que la constitution du pare-chocs en plusieurs parties mobiles les unes par rapport aux autres, confèrent à ce pare-chocs une architecture complexe.

En outre, les blocs latéraux fixes gênent l'accès au volume intérieur du véhicule et réduisent considérablement la dimension transversale du seuil de chargement.

Le document EP 0745516 A divulgue un pare-chocs arrière selon le preambule de la revendication 1.

L'invention a donc pour but de proposer un pare-chocs arrière pour un véhicule automobile utilitaire, ayant une hauteur adaptée pour limiter le coût des réparations en cas de choc et permettant un accès le plus large possible au volume intérieur. L'invention a également pour but de proposer un pare-chocs arrière de fabrication et de montage simple.

Pour cela l'invention porte sur un pare-chocs arrière pour véhicule automobile utilitaire monobloc et mobile entre une position de fermeture, dans laquelle un bord supérieur du pare-chocs fait saillie verticalement au-dessus d'un seuil de chargement d'un volume intérieur du véhicule, et est apte à coopérer avec au moins un ouvrant du véhicule pour fermer une ouverture d'accès au volume intérieur; et une position d'ouverture, dans laquelle le pare-chocs est entièrement situé au niveau ou au-dessous du seuil de chargement pour permettre l'accès au volume intérieur, le pare-chocs comportant un moyen de support permettant un déplacement du pare-chocs entre les positions par translation et/ou quasi translation selon une direction verticale.

Suivant des modes particuliers de l'invention, le pare-chocs comporte une ou plusieurs des caractéristiques décrites dans les revendications 2 à 11.

L'invention porte également sur un véhicule automobile utilitaire comportant un volume arrière, au moins un ouvrant et un pare-chocs tel que celui décrit précédemment, apte à coopérer avec l'ouvrant pour fermer une ouverture d'accès au volume intérieur, le bord inférieur de l'ouvrant étant situé à un niveau supérieur à celui du seuil de chargement du véhicule.

L'invention et ses avantages seront mieux compris à la lecture de la description qui va suivre, donnée uniquement à titre d'exemple, et faite en se référant aux dessins annexés, dans lesquels :
- la figure 1 est une vue en perspective arrière d'un véhicule automobile utilitaire, le pare-chocs arrière étant en position de fermeture ;
- la figure 2 est identique à la figure 1, le pare-chocs arrière étant en position d'ouverture ;
- la figure 3 est une représentation en perspective d'une première variante de réalisation de la structure du pare-chocs des figures 1 et 2 ;
- la figure 4 est une représentation en perspective d'une seconde variante de réalisation de la structure du pare-chocs ; et,
- la figure 5 est une représentation en perspective d'une troisième variante de réalisation de la structure du pare-chocs.

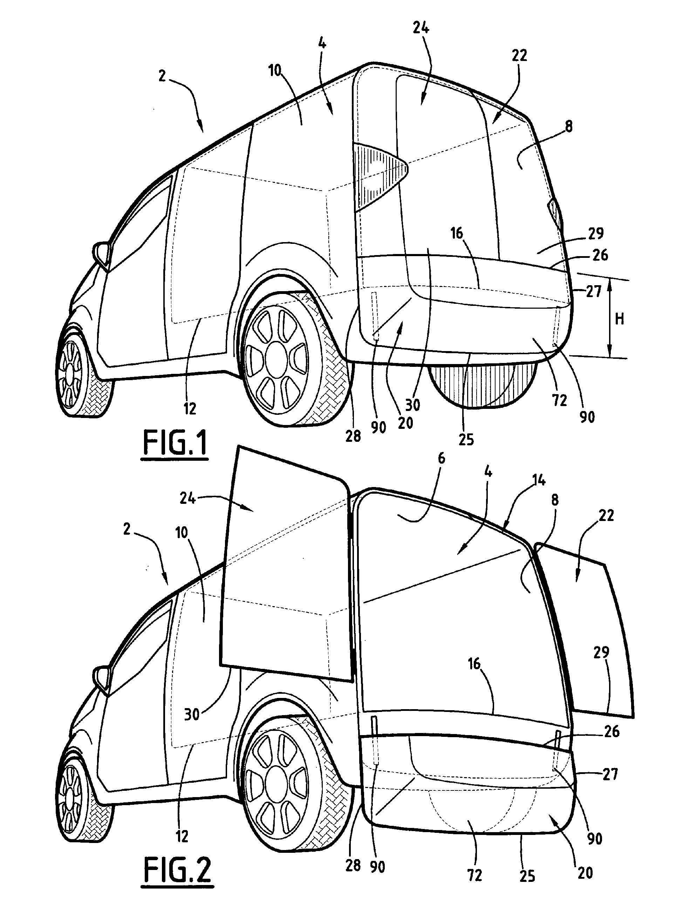

Les figures 1 et 2 représentent un véhicule automobile utilitaire 2 qui comporte un volume intérieur 4 arrière. Le volume intérieur 4 est délimité par un plafond 6, des parois droite 8 et gauche 10, et un plancher 12 essentiellement horizontal.

Le volume intérieur 4 est accessible par une ouverture arrière 14. Au niveau de l'ouverture 14, le plancher 12 présente un seuil de chargement 16 qui lui est coplanaire.

Le véhicule 2 comporte, à l'arrière, un pare-chocs 20 mobile entre une position d'ouverture et une position de fermeture, ainsi qu'un ou plusieurs ouvrants supérieurs. Ces ouvrants supérieurs peuvent être constitués par deux portes battantes ou par un hayon, ce dernier étant monté pivotant autour d'une charnière verticale sur la paroi supérieure. Dans le cas ou ces ouvrants sont constitués de portes battantes, ils comporteront classiquement une porte droite 22 et une porte gauche 24. La porte droite 22, respectivement la porte gauche 24, est montée pivotante autour d'une charnière verticale sur la paroi droite 8, respectivement la paroi gauche 10, de la caisse du véhicule 2. Le bord inférieur 29, 30 des deux portes 22, 24 est situé à un niveau supérieur à celui du seuil de chargement 16.

En variante, le véhicule comporte un unique ouvrant constitué par un hayon monté pivotant sur la paroi supérieure du coffre arrière du véhicule.

Le pare-chocs 20 mobile est apte à être déplacé par translation, et/ou quasi-translation, selon une direction verticale, entre la position de fermeture, représentée à la figure 1, et la position d'ouverture, représentée à la figure 2.

Dans la position de fermeture, c'est-à-dire lorsque le pare-chocs 20 mobile se trouve dans sa position haute, le bord supérieur 26 du pare-chocs 20 mobile fait saillie verticalement au-dessus du seuil de chargement 16. Le bord supérieur 26 peut coopérer avec les bords inférieurs des portes droite 22 et gauche 24 pour fermer l'ouverture 14 d'accès au volume intérieur 4. Dans la position de fermeture, les bords latéraux droit 27 et gauche 28 du pare-chocs 20 sont affleurants aux parois latérales droite 8 et gauche 10 de la caisse du véhicule 2, tandis qu'un bord inférieur 25 du pare-chocs est affleurant à une paroi inférieure de la caisse du véhicule 2.

Dans la position d'ouverture, c'est-à-dire lorsque le pare-chocs 20 mobile est dans sa position basse, le bord supérieur 26 du pare-chocs 20 est situé au-dessous, ou, en variante, au niveau, du seuil de chargement 16 du plancher 12. Ainsi le pare-chocs 20 ne gène pas le chargement d'objet dans le volume intérieur 4, l'ouverture 14 étant totalement dégagée. On notera que le seuil de chargement 16 s'étend sur la totalité de la largeur du volume intérieur 4.

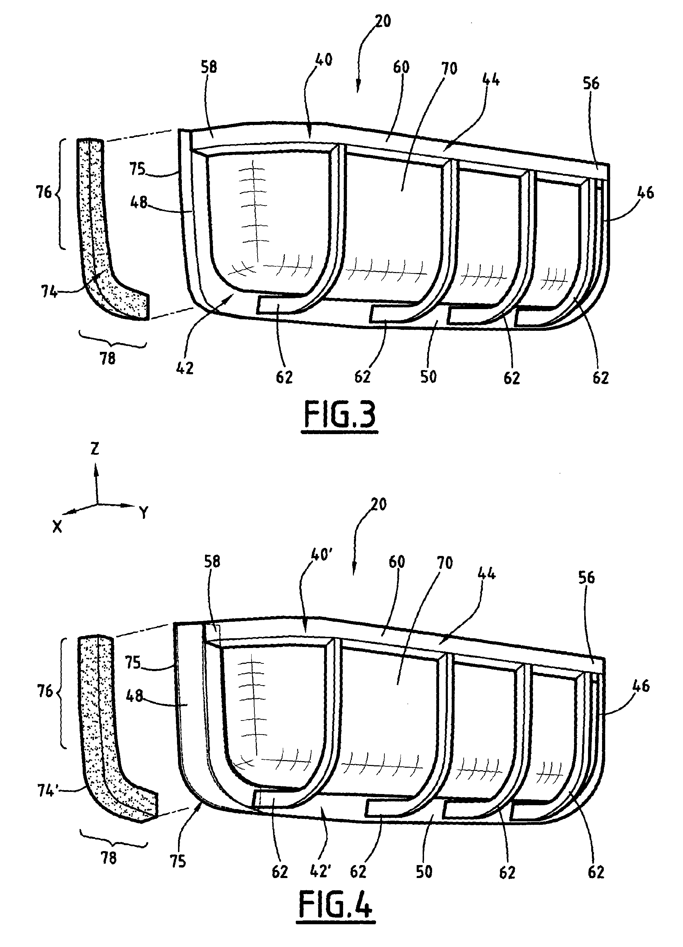

Le pare-chocs 20 mobile va maintenant être décrit plus en détail en référence à la figure 3. Le pare-chocs 20 mobile est monobloc et s'étend transversalement de la paroi latérale droite 8 à la paroi latérale gauche 10 du véhicule 2.

Le pare-chocs 20 mobile comporte une structure 40 permettant de répartir les forces générées lors d'un choc vers des bords périphériques du pare-chocs. Ces bords périphériques sont formés par les bords latéraux droit 27 et gauche 28 et le bord inférieur 25, et sont en appui sur des éléments de la caisse du véhicule 2. Ces éléments de la caisse du véhicule sont constitués, de préférence, par des surfaces verticales planes aptes à recevoir les bords périphériques du pare-chocs. Il s'agit, par exemple, de platines verticales étendues droite et gauche, reliant, d'un même côté de la caisse du véhicule, en voie haute, la face arrière d'extrémité d'un longeron, et, en voie basse, la face arrière d'une équerre, s'étendant verticalement vers le bas à partir de la face orientée vers le bas du longeron.

La structure 40 est du type cage et est recouverte par au moins une peau extérieure.

La structure 40, de forme générale en berceau, comporte une première traverse 42 conformée pour définir les bords latéraux droit 27 et gauche 28 et le bord inférieur 25 du pare-chocs 20. La structure 40 comporte une seconde traverse 44, conformée pour définir le bord supérieur 26 du pare-chocs 20.

La première traverse 42 est de forme en U, dont les extrémités sont recourbées vers le haut. Cette traverse 42 comporte des premiers bras latéraux droit 46 et gauche 48, reliés par une première partie intermédiaire 50. En position montée sur le véhicule 2, et en position de fermeture du pare-chocs 20 mobile, la première traverse 42 se situe dans un plan vertical, parallèle à la direction transversale du véhicule 2. Chacun des premiers bras latéraux droit 46 et gauche 48 définit le bord latéral droit 27 ou gauche 28 du pare-chocs 20 et vient dans le prolongement de la paroi droite 8 ou gauche 10 de la caisse du véhicule 2. De manière similaire, la première partie intermédiaire 50 définit le bord inférieur 25 du pare-chocs 20 mobile.

La seconde traverse 44 de la structure 40 est également de forme en U, dont les extrémités sont recourbées vers l'avant. Cette traverse 44 présente des seconds bras latéraux droit 56 et gauche 58, reliés par une portion intermédiaire 60. La seconde traverse 44 est conformée de manière à suivre le profil du bord supérieur 26 et par conséquent, des bords inférieurs 29 et 30 des portes droite 22 et gauche 24. En position montée sur le véhicule 2, et en position de fermeture du pare-chocs 20 mobile, la seconde traverse 44 se situe dans un plan horizontal et est située vers l'arrière par rapport au plan vertical de la première traverse 42. L'extrémité libre du premier bras latéral droit 46 est fixée, à angle droit, sur l'extrémité libre du second bras latéral droit 56. De manière similaire, l'extrémité libre du premier bras latéral gauche 48 est fixée sur l'extrémité libre du second bras latéral gauche 58.

La structure 40 comporte une pluralité de jambages 62 de forme arquée. Chaque jambage 62, disposé verticalement en position montée du pare-chocs 20 sur le véhicule 2, relie la première partie intermédiaire 50 de la première traverse 42 à la seconde partie intermédiaire 60 de la seconde traverse 44.

Les première et seconde traverses 42 et 44 et les jambages 62 sont réalisés en une matière plastique rigide. Les traverses sont avantageusement réalisées par injection d'un matériau en polymère thermoplastique (par exemple du polypropylène PP). Cette configuration est apte à dissiper intégralement l'énergie d'un choc de type « Danner », à participer à la réparabilité lors de chocs de moyenne intensité, mais aussi à protéger des occupants du véhicule, en particulier contre le « coup du lapin ». De préférence, les jambages 62 sont venus de matière avec les première et seconde traverses 42 et 44.

En variante, les traverses sont en métal ou en un matériau hybride métal/polymère.

La structure 40 ainsi formée est recouverte extérieurement par une peau extérieure 72, non représentée sur la figure 3 pour plus de clarté, et éventuellement intérieurement par une peau intérieure 70. Les peaux intérieure 70 et extérieure 72 sont de préférence réalisées en un matériau plastique.

La structure comporte des moyens de fixation de la peau et d'accessoires équipant le pare-chocs. De préférence ces moyens de fixation sont venus de matière avec la structure. Ils sont conformés pour autoriser un montage et un démontage à volonté.

Pour améliorer l'absorption d'énergie lors d'un choc arrière, le pare-chocs 20 mobile est muni d'un amortisseur de choc droit (non représenté) et d'un amortisseur de chocs gauche 74. Il s'agit de préférence d'un élément, à section transversale rectangulaire, apte à être compressé selon son épaisseur pour dissiper une fraction de l'énergie transmise lors d'un choc arrière.

Dans une première variante de réalisation, l'amortisseur de chocs 74 est solidaire de la première traverse 42 et est positionné sur une face 75 de celle-ci. L'amortisseur de chocs 74 est constitué d'un profilé métallique, par exemple en aluminium, dont le volume intérieur est rempli d'une mousse apte à absorber de l'énergie lors de sa compression. En variante, l'amortisseur de chocs 74 est réalisé en un matériau en nid d'abeille d'aluminium ou d'un composite, en polymère injecté et caissonné, en mousse aluminium, ou en tout autre matériau économique susceptible d'absorber l'énergie d'un choc à basse ou moyenne vitesse. L'amortisseur de chocs 74 reprend la forme arquée du bras gauche 48 de la première traverse 42. L'amortisseur de chocs 74 comporte une portion supérieure 76 et une portion inférieure 78. Lorsque le pare-chocs 20 mobile est monté sur le véhicule 2 et est en position de fermeture, l'amortisseur de chocs 74 est situé entre la traverse 42 et le véhicule 2 : la portion supérieure 76 de l'amortisseur gauche 74 prend appui, du côté du véhicule 2, sur la paroi gauche 10, tandis que la portion inférieure 78 prend appui, du côté du véhicule 2, sur un longeron du châssis du véhicule 2. Une description similaire pourrait être faite au sujet de l'amortisseur de chocs droit.

Dans une seconde variante de réalisation illustrée à la figure 4, la première traverse 42' comporte sur sa face antérieure un logement creux 75 destiné à recevoir un amortisseur de chocs 74' d'épaisseur adaptée.

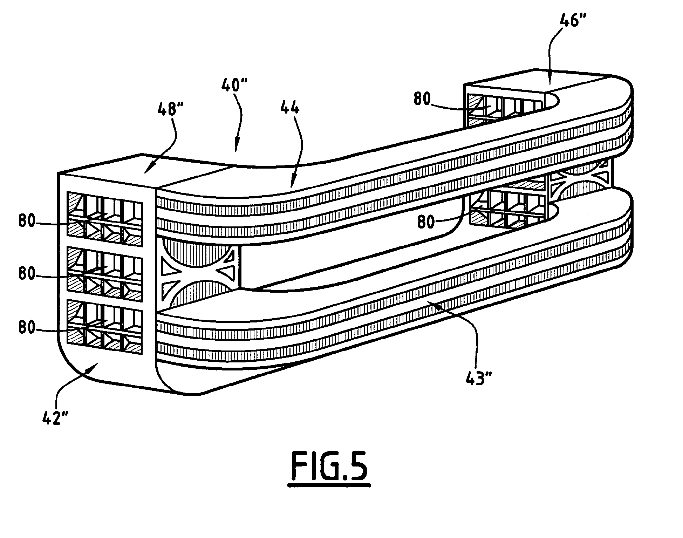

Dans une troisième variante de réalisation illustrée à la figure 5, les amortisseurs de chocs sont venus de matière avec la première traverse 42". Les portions d'extrémité 46" et 48" de la première traverse 42" sont formées par la superposition d'amortisseurs de chocs élémentaires 80. Le pare-chocs présente des performances accrues en termes de dissipation d'énergie, notamment lors de chocs 16 km/h du type « Danner ». On notera que selon cette troisième variante de réalisation, la structure 40" ne comporte pas de jambages verticaux entre les traverses 42" et 44, mais présente une troisième traverse 43", de forme arquée, disposée dans un plan horizontal, au-dessous de la seconde traverse 44, et reliant les portions d'extrémité 46" et 48" de la premières traverse 42".

Le pare-chocs 20 est monté sur le véhicule 2 par l'intermédiaire d'un moyen de support permettant le mouvement du pare-chocs 20 entre sa position haute et sa position basse, et inversement. Le moyen de déplacement comporte des glissières de guidage 90 permettant un mouvement de translation du pare-chocs 20 par rapport à la caisse du véhicule. De telles glissières présentent le défaut d'être déformables, ce qui peut nécessiter leur remplacement à la suite d'un choc.

En variante, le moyen de déplacement comporte des tringleries articulées sensiblement en parallélogramme permettant un mouvement de translation ou de quasi-translation du pare-chocs 20 par rapport à la caisse du véhicule.

Une telle tringlerie articulée peut par exemple former un parallélogramme déformable, comportant, de chaque côté de la caisse du véhicule, deux bras parallèles entre eux. Chaque bras comporte une première extrémité montée pivotante sur la structure de caisse, de préférence sur une platine fixée à l'extrémité d'un longeron du châssis, et une seconde extrémité montée pivotante sur le pare-chocs.

Selon ce mode de réalisation, à tout moment de son utilisation, le pare-chocs 20 présente sensiblement la même orientation. En particulier, en position d'ouverture, le pare-chocs 20 joue encore un rôle de protection de l'arrière du véhicule.

Le pare-chocs présente, sur sa face avant, des moyens de verrouillage et/ou des moyens de maintien en position aptes à coopérer avec des moyens conjugués dont est munie la carrosserie.

De préférence le pare-chocs ne peut être ouvert que si les ouvrants supérieurs le sont. De ce fait, les moyens de verrouillage et de maintien en position sont avantageusement simples : goupille à ressort, poignée...

On notera qu'en position de fermeture, le bord supérieur 26 du pare-chocs 20 mobile fait saillie au-dessus du seuil de chargement 16 et forme une ridelle permettant de garantir que des petits objets posés sur le plancher 12 du volume intérieur 4 ne glissent pas hors du véhicule 2 alors qu'il est en mouvement et que ses portes 22 et 24 sont laissées ouvertes, à cause par exemple de la présence d'un objet de grande longueur qui ne rentre pas intégralement dans le volume intérieur 4.

Le pare-chocs mobile peut former un marchepied lorsqu'il est placé en position d'ouverture. L'homme du métier saura comment choisir les matériaux adaptés permettant au pare-chocs mobile de supporter les contraintes liées à cette utilisation.

En cas de choc arrière, la structure 40 du pare-chocs 20 mobile permet de répartir les efforts : une fraction des forces appliquées à la seconde traverse 44, au niveau de sa partie intermédiaire 60 ou des ses bras 56 et 58 arqués, est transférée vers la première traverse 42 au niveau des points de jonction entre les première et seconde traverses 42 et 44 ; l'autre fraction des forces appliquées est guidée, par les jambages 62, vers la partie intermédiaire 50 de la première traverse 42. La première traverse 42 transmet ensuite les forces qui lui sont appliquées directement, ou indirectement par l'intermédiaire des amortisseurs de choc, à la caisse et aux longerons du châssis du véhicule 2.

Le pare-chocs mobile selon l'invention présente une hauteur H importante par rapport aux pare-chocs équipant les véhicules utilitaires selon l'art antérieur, tout en maximisant l'accès au volume intérieur. Les bords inférieurs des ouvrants sont situés en hauteur, et ne descendent pas jusqu'au niveau du plancher du volume intérieur. Ainsi, en cas de choc, le pare-chocs mobile joue son rôle de dissipateur d'énergie. Il est déformé et éventuellement brisé. En revanche, les parties inférieures des ouvrants présentent moins de risque d'être touchées durant ce même choc. On réduit d'autant le nombre des pièces abîmées et les coûts de réparation afférents.

Alors que dans le mode de réalisation décrit, le véhicule utilitaire comporte deux portes battantes, il est parfaitement possible que le véhicule utilitaire comporte une porte unique à axe vertical, ou un ouvrant de type hayon ayant un axe horizontal et une partie mobile s'ouvrant vers le haut. Ce dernier mode de réalisation est particulièrement approprié au cas d'un véhicule particulier SUV tel que ludospace, monospace.

Avantageusement, le pare-chocs selon l'invention étant monobloc, le nombre de pièces est réduit. Il présente donc un coût d'installation ou de remplacement faible. Il est d'une structure simple lui assurant un coût de fabrication réduit.

L'homme du métier comprendra que la structure venant d'être décrite permet une absorption satisfaisante des chocs tout en présentant un nombre réduit d'éléments, et pouvant être obtenu à faible coût.

## Revendications

1. Pare-chocs arrière pour véhicule automobile utilitaire (2), qu'il est monobloc et est mobile entre :
- une position de fermeture, dans laquelle un bord supérieur (26) du pare-chocs (20) fait saillie verticalement au-dessus d'un seuil de chargement (16) d'un volume intérieur (4) du véhicule, et est apte à coopérer avec au moins un ouvrant (22, 24) du véhicule pour fermer une ouverture (14) d'accès au volume intérieur; et,
- une position d'ouverture, dans laquelle le pare-chocs est entièrement situé au niveau ou au-dessous du seuil de chargement pour permettre l'accès au volume intérieur,
le pare-chocs comportant un moyen de support (90) permettant un déplacement, selon une direction verticale, du pare-chocs entre lesdites positions par translation et/ou quasi translation, **caractérisé en ce que** le pare-chocs présentant sensiblement la même orientation à tout moment de son utilisation.

2. Pare-chocs selon la revendication 1, **caractérisé en ce qu'**il s'étend transversalement de la paroi latérale droite à la paroi latérale gauche du véhicule.

3. Pare-chocs selon la revendication 1 ou la revendication 2, **caractérisé en ce qu'**il comporte une structure (40, 40', 40") apte à répartir les forces générées lors d'un choc arrière vers une surface d'appui du pare-chocs (20) sur le véhicule (2), la surface d'appui étant située sur un bord latéral (27, 28) ou inférieur (25) du pare-chocs.

4. Pare-chocs selon la revendication 3, **caractérisé en ce que** la structure (40, 40', 40") est réalisée en une matière plastique rigide.

5. Pare-chocs selon la revendication 3 ou la revendication 4, **caractérisé en ce que** la structure (40, 40', 40") comporte :
- une première traverse (42, 42', 42") à extrémités relevées, conformée pour définir les bords inférieur (25) et latéraux (27, 28) du pare-chocs (20) ; et
- une seconde traverse (44), conformée pour définir le bord supérieur (26) du pare-chocs ;

6. Pare-chocs selon la revendication 5, **caractérisé en ce que** la structure est du type cage et comporte une pluralité de jambages (62) reliant les première et seconde traverses entre elles.

7. Pare-chocs selon la revendication 6, **caractérisé en ce que** la seconde traverse (44) comporte des extrémités latérales recourbées vers l'avant, et **en ce que** les jambages (62) ont une extrémité inférieure recourbée vers l'avant.

8. Pare-chocs selon la revendication 6 ou la revendication 7, **caractérisé en ce que** les jambages (62) sont venus de matière avec les première et seconde traverses.

9. Pare-chocs selon l'une quelconque des revendications 3 à 8, **caractérisé en ce que** la structure (40, 40', 40") est recouverte par une peau (70, 72).

10. Pare-chocs selon l'une quelconque des revendications 3 à 9, **caractérisé en ce qu'**il comporte au moins un amortisseur de choc, définissant la surface d'appui du pare-chocs sur le véhicule (2).

11. Pare-chocs selon la revendication 10, **caractérisé en ce que** l'amortisseur de choc est venu de matière avec la structure (40").

12. Véhicule automobile utilitaire comportant un volume arrière, au moins un ouvrant et un pare-chocs, **caractérisé en ce que** le pare-chocs est un pare-chocs (20) selon l'une quelconque des revendications 1 à 11, apte à coopérer avec l'ouvrant (22, 24) pour fermer une ouverture (14) d'accès au volume intérieur (4), le bord inférieur (29, 30) de l'ouvrant (22, 24) étant situé à un niveau supérieur à celui du seuil de chargement (16) du véhicule (2).

## Claims

1. Rear bumper for a commercial motor vehicle (2), **characterised in that** it is made in one piece and is movable between:
- a closed position in which an upper edge (26) of the bumper (20) projects vertically above a loading threshold (16) of an inner volume (4) of the vehicle, and is capable of cooperating with at least one door (22, 24) of the vehicle for closing an opening (14) giving access to the inner volume; and,
- an open position in which the bumper is located entirely at or below the loading threshold for accessing the inner volume,
the bumper having a means of support (90) enabling a movement of the bumper, in a vertical direction, between the said positions by translation and/or quasi-translation, **characterised in that** the bumper has substantially the same orientation at any time of its use.

2. Bumper according to claim 1, **characterised in that** it extends transversely from the right-hand sidewall to the left-hand sidewall of the vehicle.

3. Bumper according to claim 1 or claim 2, **characterised in that** it includes a structure (40, 40', 40") capable of distributing the forces generated during a rear impact to a bearing surface of the bumper (20) of the vehicle (2), the bearing surface being disposed on a lateral edge (27, 28) or lower edge (25) of the bumper.

4. Bumper according to claims 3, **characterised in that** the structure (40, 40', 40") is made of a rigid plastic.

5. Bumper according to claim 3 or claim 4, **characterised in that** the structure (40, 40', 40") includes:
- a first cross member (42, 42', 42") with raised ends, shaped to define the lower edge (25) and side edges (27, 28) of the bumper (20); and
- a second cross member (44), shaped to define the upper edge (26) of the bumper;

6. Bumper according to claim 5, **characterised in that** the structure is of the cage type and includes a plurality of leg members (62) connecting the first and second cross members together.

7. Bumper according to claim 6, **characterised in that** the second cross member (44) includes forwardly curved lateral ends, and **in that** the leg members (62) have a forwardly curved lower end.

8. Bumper according to claim 6 or claim 7, **characterised in that** the leg members (62) are integral with the first and second cross members.

9. Bumper according to any one of claims 3 to 8, **characterised in that** the structure (40, 40', 40") is covered by a skin (70, 72).

10. Bumper according to any one of claims 3 to 9, **characterised in that** it includes at least one shock absorber, defining the bearing surface of the bumper on the vehicle (2).

11. Bumper according to claim 10, **characterised in that** the shock absorber is integral with the structure (40").

12. Commercial motor vehicle including a rear volume, at least one door and a bumper, **characterised in that** the bumper is a bumper (20) according to any one of claims 1 to 11 capable of cooperating with the door (22, 24) for closing an opening (14) giving access to the inner volume (4), the bottom edge (29, 30) of the door (22, 24) being disposed at a higher level than that of the loading threshold (16) of the vehicle (2).

## Patentansprüche

1. Hintere Stoßstange für Nutzfahrzeug (2) in Blockbauweise und beweglich zwischen:
- einer Schließposition, bei der ein oberer Rand (26) der Stoßstange (20) sich in vertikaler Richtung über dem Niveau einer Ladeschwelle (16) eines innenraums (4) des Fahrzeugs befindet und fähig ist, mit wenigstens einer Flügeltür (22, 24) des Fahrzeugs zu kooperieren, um eine Zugangsöffnung (14) zu dem Innenraum zu verschließen; und
- eine Öffnungsposition, bei der sich die Stoßstange ganz auf dem Niveau der Ladeschwelle oder darunter befindet, um den Zugang zu dem innenraum zu ermöglichen.
wobei die Stoßstange eine Trageinrichtung (90) umfasst, die eine Verschiebung der Stoßstange in vertikaler Richtung zwischen den genannten Positionen ermöglicht, translatorisch oder quasitranslatorisch,
**dadurch gekennzeichnet, dass** die Stoßstange in jedem Moment ihrer Benutzung im Wesentlichen dieselbe Ausrichtung aufweist.

2. Stoßstange nach Anspruch 1, **dadurch gekennzeichnet, dass** sie sich transversal von der rechten Seitenwand zu der linken Seitenwand des Fahrzeugs erstreckt.

3. Stoßstange nach Anspruch 1 oder Anspruch 2, **dadurch gekennzeichnet, dass** ihre Struktur (40, 40', 40") fähig ist, die während eines Heckaufpralls erzeugten Kräfte auf eine Abstützfläche der Stoßstange (20) am Fahrzeug (2) zu verteilen, wobei sich die Abstützfläche an einem seitlichen (27, 28) oder unteren (25) Rand der Stoßstange befindet.

4. Stoßstange nach Anspruch 3, **dadurch** gekenntzeichnet, dass die Struktur (40, 40', 40") aus einem steifen Kunststoff hergestellt ist.

5. Stoßstange nach Anspruch 3 oder Anspruch 4, **dadurch gekennzeichnet, dass** die Struktur (40, 40', 40") umfasst:
- eine erste Traverse (42, 42', 42") mit nach oben gebogenen Enden und so geformt, dass sie die Ränder der Stoßstange (20) unten (25) und seitlich (27, 28) definiert; und
- eine zweite Traverse (44), so geformt, dass sie den oberen Rand (26) der Stoßstange definiert;

6. Stoßstange nach Anspruch 5, **dadurch gekennzeichnet, dass** die Struktur käfigartig ist und eine Vielzahl Pfosten (62) umfasst, die die erste und zweite Traverse miteinander verbinden.

7. Stoßstange nach Anspruch 6, **dadurch gekennzeichnet, dass** die zweite Traverse (44) nach vorn gebogene seitliche Enden umfasst und dass die Pfosten (62) ein nach vorn gebogenes unteres Ende haben.

8. Stoßstange nach Anspruch 6 oder Anspruch 7, **dadurch gekennzeichnet, dass** die Pfosten (62) aus einem Stück mit der ersten und zweiten Traverse sind.

9. Stoßstange nach einem der Ansprüche 3 bis 8, **dadurch gekennzeichnet, dass** die Struktur (40, 40', 40") von einer Haut (70, 72) bedeckt ist.

10. Stoßstange nach einem der Ansprüche 3 bis 9, **dadurch gekennzeichnet, dass** sie wenigstens einen die Abstützfläche der Stoßstange am Fahrzeug (2) definierenden Stoßdämpfer aufweist.

11. Stoßstange nach Anspruch 10, **dadurch gekennzeichnet, dass** der Stoßdämpfer aus einem Stück mit der Struktur (40") ist.

12. Nutzfahrzeug mit einem hinteren Innenraum, wenigstens einer Flügeltür und einer Stoßstange, **dadurch gekennzeichnet, dass** die Stoßstange eine Stoßstange (20) nach einem der Ansprüche 1 bis 11 ist, fähig mit der Flügeltür (22, 24) des Fahrzeugs zu kooperieren, um eine Zugangsöffnung (14) zu dem Innenraum (4) zu verschließen, wobei der untere Rand (29, 30) der Flügeltür (22, 24) sich auf einem höheren Niveau als dem der Ladeschwelle (16) des Fahrzeugs (2) befindet.
